# EUROPEAN PATENT SPECIFICATION

(11) **EP 0 637 906 B1**
(45) Date of publication and mention of the grant of the patent: **04.03.1998**
(21) Application number: 93909051.0
(22) Date of filing: 15.04.1993
(51) Int. Cl.: A01B 79/00, A01C 23/02, A01G 29/00

(54) **APPARATUS FOR DECOMPACTING SOIL**
GERÄT ZUR BODENLOCKERUNG
APPAREIL POUR RENDRE LE SOL MOINS COMPACT

(30) Priority: 27.04.1992 GB 9209046
(43) Date of publication of application: 15.02.1995
(73) Proprietor: STEPONCE TRADING LIMITED, Helston, Cornwall TR13 8EU (GB)
(72) Inventor: RUNDLE, Simon William Robert, Midhurst, West Sussex GU29 9LH (GB)
(74) Representative: Jennings, Nigel Robin
(86) International application number: GB9300799
(87) International publication number: WO9321753

(56) References cited:
- BE-A- 454 571
- FR-A- 1 001 591
- FR-A- 2 403 729
- FR-A- 2 572 241
- GB-A- 2 144 961
- US-A- 3 148 643
- US-A- 5 088 562

## Description

The present invention relates to apparatus for decompacting soil and is concerned with that type of apparatus which comprises a hand-held probe including a first portion which is to be driven into the soil, the said portion of the probe defining a decompacting gas passage extending along its length which communicates with one or more holes opening out through the surface of the probe and with a decompacting gas tank via a first valve, the decompacting gas tank communicating with a source of compressed decompacting gas via a second valve, the probe including an abutment, a hammer being arranged to be reciprocated vertically to strike the abutment to drive the first portion into the soil. Such apparatus operates by injecting a compressed gas into the soil which breaks up its structure and creates cracks and voids thereby decompacting it.

It is known that one of the factors which influences the vigour of plant growth and crop yields is the degree of compaction of the soil. If the soil has become very compacted, the access of oxygen and other gases to the underlying soil is restricted thereby retarding biological processes and the permeation of water and nutrients from the surface. It is, therefore, desirable periodically to decompact soil which has become excessively compacted.

Known apparatus for decompacting soil comprises a wheeled trolley carrying a compressor, a receiver, a gas probe and means for automatically advancing the probe a short distance into the soil. In use, the compressor is operated until a predetermined pressure is reached in the receiver. A valve is then operated manually whereafter the probe is advanced into the soil and the compressed air in the receiver is released into the soil through a passageway and one or more holes formed in the probe. This apparatus is both heavy and cumbersome and also expensive. It can not be used on sloping ground and has no facility for adjusting the pressure of the gas which is injected into the soil. It will be appreciated that adjustment of the gas pressure is desirable in order to accommodate differing soil types and degrees of compaction.

Apparatus for decompacting soil of the type referred to above is disclosed in GB-A-2144961. This apparatus includes a hand held probe which defines a gas passage extending along its length which communicates with holes opening out through the surface of the probe and with a compressed air tank. A compressed air driven hammer is arranged to drive the probe into the ground. The compressed air hammer is controlled by a first manual control valve and connected to a source of compressed air which is also connected to the compressed air tank by a pathway which includes a second manual control valve. The compressed air tank is connected to the passageway within the probe by means of a third manual control valve. In use, the air hammer is firstly actuated to drive the probe into the ground. The second control valve is then opened and when the compressed air tank is charged the third control valve is opened to discharge the compressed air within the tank through the probe into the ground.

Although the apparatus described above represents a slight improvement on apparatus of the type in which the probe is mounted on the trolley in that the probe is hand held, the probe is very heavy and cumbersome, principally due to the incorporation of the air hammer which renders the probe generally similar to a pneumatic drill of the type commonly used for repairing roads. The fact that compressed air is consumed not only for injection into the soil but also for powering the air hammer means that the total compressed air requirement is very considerable. This requirement can only realistically be satisfied by a compressor which not only adds considerably to the expense but means also that the compressor must be moved as the operative moves. The apparatus is thus not truly readily portable as a whole and the expense and relative immovability of the compressor thus render the apparatus unsuitable for domestic or light commercial use.

FR-A-1001591 discloses apparatus for injecting gaseous fertiliser into the soil. The apparatus includes a probe which communicates with a pressurised water line via a tap and with a pressurised fertiliser gas cannister. The fertiliser gas canister communicates via a valve with a metering container, upstream and downstream of which are respective control valves. In use, the probe is firstly pushed into the ground and water control valve is then actuated to inject water into the ground, thereby sealing its pores. Fertiliser gas is then permitted to flow into the metering gas container and the gas in the metering container is then permitted to flow through the probe into the soil. The fertiliser gas remains in and dissipates through the soil and does not escape to the atmosphere due to the fact that the pores in the soil are sealed by the water.

It is the object of the present invention to provide apparatus for decompacting soil which overcomes the problems referred to above and which, in particular, is more versatile and whose size, price and mode of operation renders its use practicable in a wider variety of situations, in particular for light commercial or domestic use, e.g. in an ordinary domestic garden.

According to the present invention apparatus for decompacting soil of the type referred to above is characterised in that the decompacting gas tank is a low-pressure gas tank, that the low-pressure gas tank is adapted to contain gas at a pressure of between 5 x 10⁵ and 40 x 10⁵ pa (5 and 40 bar), that the source of compressed decompacting gas is a high-pressure gas tank and that the probe includes a second portion on which the hammer is slidably received, which hammer includes a handle by which it may be manually reciprocated.

Thus in the apparatus in accordance with the invention no compressor is required and the gas which is injected into the soil is supplied from a prefilled high pressure tank. Such tanks are commonly at a pressure of 200 bar or more and since this is very much too high a pressure for the injection of gas into the soil, the gas is delivered from the high-pressure tank into a low-pressure tank via a second valve. When the low-pressure tank has reached an appropriate pressure, the second valve is closed and the first valve is opened to inject the gas into the soil so as to decompact it. The gas is injected into the soil at a pressure of between 5 x 10⁵ and 40 x 10⁵ Pa (5 and 40 bar) and thus even if the high-and low-pressure tanks were of the same volume the apparatus could be used up to 40 times without replacing or refilling the high pressure tank and it will be appreciated that in practice the high-pressure tank is likely to be very much larger than the low-pressure tank.

The use of a high-pressure gas tank, e.g. of commercially available refillable type, as the gas source is an important factor in the reduction of the overall expense and weight of the apparatus thus rendering its use practicable in a wider variety of situations. A further important factor is the use of the manually operable hammer. In practice, manual pressure alone is frequently insufficient to push the probe the required distance into the soil and it is for this reason that known apparatus for decompacting soil includes mechanically or pneumatically actuated means for driving the probe into the soil. However, the use of such pneumatically actuated means in GB 2144961 means that it is essential that a compressor be used as the source of compressed gas since if a high-pressure gas tank were used the rate of consumption of gas would make the possible period of operation before it was necessary to refill or replace the gas tank unacceptably short.

The high-pressure tank may be mounted on a movable trolley or the like or it may be static but it is preferred that it is connected to means by which it may be carried by the user in the manner of a backpack or rucksack. It is preferred also that the low-pressure tank forms part of a separate accumulator unit which also includes the first and second valves and that the accumulator unit includes means by which it may be connected to and carried by the backpack means. Thus in this preferred embodiment all the elements of the apparatus are portable and this means that the apparatus must necessarily be relatively light and thus cheap and is thus suitable for use by domestic users and may be used on all types of ground, regardless of its inclination or restricted access.

The first and second valves may be provided with separate manually operable actuators, e.g. valve handles, but it is also possible for them to be provided with a single common valve handle which is e.g. moved in opposite directions in order to operate the two valves sequentially. It would also be possible for only the second valve to be provided with a manual actuator and for the first valve to be arranged to be opened automatically when the gas pressure in the low-pressure tank has reached a predetermined value.

One of the principal advantages of the apparatus of the present invention is that the pressure at which the gas is injected into the soil may be varied at will and is not determined by the pressure in the high-pressure tank. For this purpose, it is preferred that the apparatus includes a pressure gauge arranged to indicate the gas pressure within the low-pressure gas tank or to indicate when the pressure within the low-pressure gas tank has reached a predetermined level. The desired gas injection pressure may thus be selected by the user in accordance with the soil type, the depth to which it is to be decompacted and the degree of decompaction that is required and the second valve is then opened until the pressure in the low-pressure tank has reached that level whereafter the second valve is closed and the first valve is opened to inject the gas into the soil. Alternatively, a pressure gauge as such is not present but the apparatus is provided with adjustment means having two or more predetermined pressure settings and means for indicating when the preset pressure has been reached whereafter the second valve is closed, either manually or automatically, and the first valve is opened, again either manually or automatically.

The apparatus of the present invention finds particular application for improving the condition of excessively compacted soil and such soil frequently also lacks sufficient nutrients to support vigorous plant growth. Thus in the preferred embodiment of the invention the apparatus further includes fertiliser dispensing means communicating with the gas passage within the probe. The fertiliser dispensing means will be arranged to dispense a predetermined amount of fertiliser, in liquid, powder or granule form, directly or indirectly into the gas passage within the probe prior to the opening of the second valve, whereby the fertiliser is then injected into the soil at the same time as it is decompacted.

Further features and details of the invention will be apparent from the following description of one specific embodiment which is given by way of example with reference to the single accompanying drawing which is a diagrammatic, partly sectioned, side elevation of a soil decompacting apparatus in accordance with the invention.

The principal elements of the illustrated apparatus are a hollow metallic lance or probe 2 including a slide hammer, an accumulator 4 including a low pressure gas tank or receiver and a backpack unit 6 including a high pressure gas tank.

The probe 2 includes an elongate rod divided into two portions, a lower portion 8 for insertion into the ground and an upper portion 10, which are separably connected together by means of a connector block 12 which is permanently connected to the upper portion 8 and removably screw threadedly connected to the lower portion 8. The upper end of the upper portion 10 terminates in a lateral handle 14 whose free end is externally threaded and the lower end of the lower portion 8 terminates in a replaceable pointed tip 16. Extending within the length of the rod 8, 10 and handle 14 is a gas passage whose lower end terminates short of the pointed end 8, whose upper end terminates at the free end of the handle 14 and whose lower portion communicates with a plurality of holes 18 which are spaced along the length of the lower portion 8 and open out through its lateral surface. Slidably carried on the upper portion 10 of the rod is a slide hammer which includes a relatively massive weight 20 with a central hole in it through which the upper portion 10 passes. Connected to the weight 20 is a further rod 22 which extends parallel to the rod 8, 10 and terminates at its upper end in a lateral handle 24. At its lower end the rod 22 is bent into a U shape to provide a second handle 26. Between these two handles is a further lateral handle 28. The function of the various handles will be described below.

The accumulator 4 comprises a casing 30 accommodating a low pressure gas tank 32 which is connected to a manifold 34 which communicates with an inlet passage 36, an outlet passage 38 and with an accumulator pressure gauge 40 via a passage 42. The inlet and outlet passages 36, 38 include respective rotary control valves 44, 46 which are manually movable by means of respective control levers (not shown) which are situated on the exterior of the casing 30. The outlet passage 38 terminates in an outlet 48 to which an outlet hose 50 is connected. The inlet passage 36 terminates at an inlet connector 52. Connected to the exterior of the top of the casing 30 are two connecting loops or eyes 54 and a similar eye 56 is also connected to each side surface of the casing. The two rotary valves 44, 46 are connected by an interlock (not shown) which ensures that both valves can not be open at the same time.

The backpack unit 6 includes a substantially rigid plate or frame 58 which is similar to that conventionally used in a backpack or rucksack and connected to the front of which are two shoulder straps or webs 60 and two waist straps 61 whose free ends may be connected by means of an adjustable buckle 63. Connected to the rear of the frame 58 by means of a strap 62 is a high pressure gas tank 64 constituting a commercially available and refillable cannister of e.g. nitrogen at a high pressure of e.g. 200 bar. The outlet of the tank 64 is connected via a high pressure on/off or control valve 66 to the inlet or high pressure passage 68 of an adjustable pressure reducer or regulator 70 which is connected to a pressure gauge 72. The outlet or low pressure passage 74 of the pressure regulator 70 terminates in a connector 76 to which one end of a hose 78 is connected, the other end of which terminates in a connector 80.

In use, the high pressure gas tank 64, which may have any desired volume which is typically 5 litres or more and may be many times this, is connected to the backpack frame 58 and pressure regulator 70. The backpack unit 6 is then donned by the user with the aid of the shoulder straps 60 and the waist straps 61 are fastened. The accumulator 4 is then fastened to the backpack unit adjacent the chest or stomach of the user by connecting support straps 82 connected to the shoulder straps 60 to the eyes 54 and connecting restraining straps 84 connected to the waist straps 61 to the eyes 56. The connector 80 on the hose 78 is then connected to the inlet connector 52 on the accumulator and the outlet hose 50 is connected to the threaded connector at the end of the lateral handle 14 on the probe 2. The probe 2 may then be lifted by means of the handle 26 and the user may then walk to the location where the soil is to be decompacted carrying the entire decompacting apparatus.

When the desired location is reached the tip 16 of the probe 2 is placed against the ground. Except in those rare cases where the soil is exceptionally soft it will not be possible for the user to push the lower portion 8 of the probe into the ground merely by applying manual pressure to the handles 14 and 24 and he therefore holds the probe steady by means of the handle 14 and raises the slide hammer by means of the handle 24. The hammer is then moved rapidly downwards until the weight 20 contacts the abutment constituted by the block 12 and the impact causes the probe to move a certain distance into the ground. This is repeated as often as necessary until the probe has reached the required depth in the ground or until the stop constituted by the block 12 contacts the ground.

After opening the valve 66, the valve 44 is then opened by means of the associated lever to fill the low pressure tank 32 to the desired pressure, typically between 5 and 25 bar, which may be determined by observing the pressure gauge 40. The valve 44 is then closed and the valve 46 opened whereupon the gas in the tank 32 is released virtually instantaneously through the probe 2 and holes 18 into the soil and causes cracks and voids in it and thus decompacts it. The probe is then repositioned and the process repeated. If any difficulty is experienced in removing the probe from the ground, the slide hammer may be used in the reverse direction by grasping the handle 28 and moving it upwards until the weight 20 strikes against the abutment constituted by the connection of the upper portion 10 with the handle 14.

When the gas in the high pressure tank is nearly exhausted, this is indicated by the pressure gauge 72. The tank may then be refilled or replaced by a full one. Any gas, such as air, may be used but it is preferred that nitrogen is used because it is cheap and beneficial to plant growth. The high pressure tank has been described as backpack mounted but it may be carried on a trolley or it may be static and provided with a long trailing line connecting it to the accumulator.

The accumulator has been described as a separate unit carried against the front of the user's body but it may also be mounted on the backpack or even on the probe itself.

Due to the fact that the probe 2 is of portable, hand-held type it is suitable for domestic use and may even be used on sloping ground or in a relatively restricted space. The pressure to which the accumulator 4 is filled and thus the vigour of the decompaction process may be selected at will. The rate at which the accumulator is filled may be varied by adjustment of the pressure regulator 70.

It will be appreciated that numerous modifications may be effected to the embodiment described above. Thus the position, pattern, size and shape of the holes 18 may be varied at will to suit the soil type and condition and two or more interchangeable probes with different numbers, sizes or distributions of holes may be provided. Whilst it is necessary that the accumulator be provided with inlet and outlet valves, it is not essential that these have separate valve levers and they may be connected to be operated by a common lever or the outlet valve 46 may be constructed to open automatically when a predetermined pressure is reached in the accumulator. If it is desired to fertilise the soil at the same time as decompacting it a fertiliser reservoir (not shown) may be connected to the gas passage extending through the probe. The fertiliser may be permitted to flow in liquid or powder form under the influence of gravity into the passage before the valve 46 is opened or it may be injected into the passage after the valve 46 is opened. If the fertiliser is injected under pressure, the pressure may be derived via a pressure reducing valve from the high pressure tank 46.

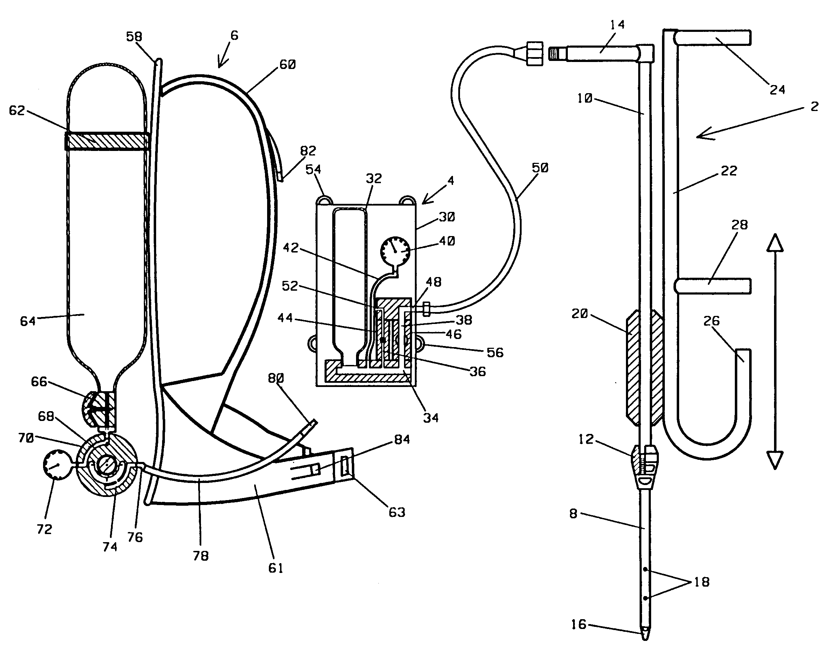

## Claims

1. Apparatus for decompacting soil comprising a hand-held probe (2) including a first portion (8) which is to be driven into the soil, the said portion (8) of the probe (2) defining a decompacting gas passage extending along its length which communicates with one or more holes (18) opening out through the surface of the probe (2) and with a decompacting gas tank (32) via a first valve (46), the decompacting gas tank (32) communicating with a source of compressed decompacting gas (66) via a second valve (44), the probe (2) including an abutment (12), a hammer being arranged to be reciprocated vertically to strike the abutment (12) to drive the first portion (8) into the soil, characterised in that the decompacting gas tank is a low-pressure gas tank (32), that the low-pressure gas tank (32) is adapted to contain gas at a pressure of between 5 x 10⁵ and 40 x 10⁵ pa (5 and 40 bar), that the source of compressed decompacting gas is a high-pressure gas tank (64) and that the probe (2) includes a second portion (10) on which the hammer (20, 24) is slidably received, which hammer includes a handle (24) by which it may be manually reciprocated.

2. Apparatus as claimed in Claim 1 characterised in that the high-pressure tank (64) is connected to means (58, 60) by which it may be carried by the user in the manner of a backpack.

3. Apparatus as claimed in Claim 1 or Claim 2 characterised in that the high-pressure tank is a refillable gas cannister (64) filled with e.g. nitrogen.

4. Apparatus as claimed in any one of the preceding claims characterised by a pressure gauge (40) arranged to indicate the gas pressure within the low-pressure tank (32).

5. Apparatus as claimed in any one of the preceding claims characterised by means (40) for indicating when the gas pressure within the low-pressure tank (32) reaches a predetermined level.

6. Apparatus as claimed in any one of the preceding claims characterised in that the low-pressure tank (32) forms part of a separate accumulator unit (4) which also includes the first and second valves (44, 46).

7. Apparatus as claimed in Claims 2 and 6 characterised in that the accumulator unit (4) includes means (54) by which it may be connected to and carried by the backpack means (58, 60).

8. Apparatus as claimed in any one of the preceding claims characterised by means arranged to dispense a fertilizer into the gas passage within the probe (2).

## Patentansprüche

1. Gerät zur Bodenlockerung, mit einer handgehaltenen Sonde (2) mit einem ersten in den Boden einzubringenden Bereich (8), wobei der Bereich (8) der Sonde (2) einen sich über seine Länge erstreckenden Lockerungsgaskanal definiert, der mit einem oder mehreren Löchern (18), die sich nach außen durch die Oberfläche der Sonde (2) öffnen, und mit einem Lockerungsgastank (32) über ein erstes Ventil (46) kommuniziert, wobei der Lockerungsgastank (32) mit einer Quelle komprimierten Lockerungsgases (66) über ein zweites Ventil (44) kommuniziert, und wobei die Sonde (2) einen Anschlag (12), und einen Hammer aufweist, der vertikal hin und her bewegbar zur Schlagbeaufschlagung des Anschlags (12) angeordnet ist, uni den ersten Bereich (8) in den Boden zu treiben, **dadurch gekennzeichnet**, daß der Lockerungsgastank ein Niedrigdruckgastank (32) ist, der zur Aufnahme von Gas bei einem Druck zwischen 5 x 10⁵ und 40 x 10⁵ Pa (5 und 40 bar) ausgebildet ist, daß die Quelle komprimierten Lockerungsgases ein Hochdruckgastank (64) ist und daß die Sonde (2) einen zweiten Bereich (10) aufweist, an dem der Hammer (20, 24) gleitend aufgenommen ist, wobei der Hammer einen Handgriff (24) aufweist, mit dem er manuell hin- und herbewegt werden kann.

2. Gerät nach Anspruch 1, **dadurch gekennzeichnet**, daß der Hochdrucktank (64) mit Einrichtungen (58, 60) verbunden ist, mittels der er von dem Benutzer nach Art eines Rücksackes getragen werden kann.

3. Gerät nach Anspruch 1 oder 2, **dadurch gekennzeichnet**, daß der Hochdrucktank ein wiederauffüllbarer Gaskanister (64) ist, der z.B. mit Stickstoff gefüllt ist.

4. Gerät nach einem der vorherigen Ansprüche, **dadurch gekennzeichnet**, daß ein Druckmesser (40) vorgesehen ist zur Anzeige des Gasdruckes in dem Niedrigdrucktank (32).

5. Gerät nach einem der vorhergehenden Ansprüche, gekennzeichnet durch Einrichtungen (40) zur Anzeige, wann der Gasdruck in dem Niedrigdrucktank (32) einen vorherbestimmten Wert erreicht.

6. Gerät nach einem der vorhergehenden Ansprüche, **dadurch gekennzeichnet**, daß der Niedrigdrucktank (32) Teil einer separaten Akkumulatoreinheit (4) ist, in der weiterhin das erste und zweite Ventil (44, 46) vorgesehen ist.

7. Gerät nach den Ansprüchen 2 und 6, **dadurch gekennzeichnet**, daß die Akkumulatoreinheit (4) Einrichtungen (54) aufweist, mit denen sie mit den Rucksackeinrichtungen (58, 60) verbunden und mit diesen transportiert werden kann.

8. Gerät nach einem der vorhergehenden Ansprüche, **gekennzeichnet** durch Einrichtungen zur Einspeisung voll Düngemittel in den Gaskanal in der Sonde (2).

## Revendications

1. Dispositif pour décompacter un sol comportant une sonde (2) tenue à la main comportant une première partie (8) qui est destinée à être entraînée dans le sol, ladite partie (8) de la sonde (2) définissant un passage de gaz de décompactage s'étendant sur sa longueur, qui communique avec un ou plusieurs trous (18) ouvrant vers l'extérieur à travers la surface de la sonde (2) et avec un réservoir de gaz de décompactage (32) via une première vanne (46), le réservoir de gaz de décompactage (32) communiquant avec une source de gaz de décompactage comprimé (66) via une seconde vanne (44), la sonde (2) comportant une butée (12), un marteau étant agencé pour se déplacer verticalement en va-et-vient pour venir heurter la butée (12) pour entraîner la première partie (8) dans le sol, caractérisé en ce que le réservoir de gaz de décompactage est un réservoir de gaz basse-pression (32), en ce que le réservoir de gaz basse-pression (32) est adapté pour contenir un gaz à une pression comprise entre 5 × 10⁵ et 40 × 10⁵ Pa (5 à 40 bars), en ce que la source de gaz de décompactage comprimé est un réservoir de gaz haute-pression (64) et en ce que la sonde (2) comporte une seconde partie (10) sur laquelle le marteau (20, 24) est reçu de manière coulissante, lequel marteau comporte une poignée (24) par laquelle il peut être déplacé manuellement en va-et-vient.

2. Dispositif selon la revendication 1, caractérisé en ce que le réservoir haute-pression (64) est connecté à des moyens (58, 60) par lesquels il peut être transporté par l'utilisateur, à la manière d'un sac a dos.

3. Dispositif selon la revendication 1 ou 2, caractérisé en ce que le réservoir haute-pression est une bouteille de gaz pouvant être remplie (64), par exemple remplie d'azote.

4. Dispositif selon l'une quelconque des revendications précédentes, caractérisé en ce qu'il comporte un dynamomètre (40) agencé pour indiquer la pression du gaz dans le réservoir basse-pression (32).

5. Dispositif selon l'une quelconque des revendications précédentes, caractérisé en ce qu'il comporte des moyens (40) pour indiquer lorsque la pression du gaz dans le réservoir basse-pression (32) atteint un niveau prédéterminé.

6. Dispositif selon l'une quelconque des revendications précédentes, caractérisé en ce que le réservoir basse-pression (32) forme une partie d'une unité formant accumulateur séparé (4) qui comporte aussi la première et la seconde vanne (44, 46).

7. Dispositif selon les revendications 2 et 6, caractérisé en ce que l'unité formant accumulateur (4) comporte des moyens (54) par lesquels elle peut être connectée à des moyens formant sac à dos (58, 60) et transportée par ceux-ci.

8. Dispositif selon l'une quelconque des revendications précédentes, caractérisé en ce qu'il comporte des moyens agencés pour distribuer un agent fertilisant à l'intérieur du passage de gaz situé dans la sonde (2).
